# EUROPEAN PATENT SPECIFICATION

(11) **EP 4 274 049 B1**
(45) Date of publication and mention of the grant of the patent: **07.05.2025**
(21) Application number: 21914117.3
(22) Date of filing: 23.12.2021
(51) Int. Cl.: H02J 7/00

(54) **CHARGING CONVERSION DEVICE, AND CHARGING CONTROL METHOD**
LADEUMWANDLUNGSVORRICHTUNG UND LADESTEUERUNGSVERFAHREN
DISPOSITIF DE CONVERSION DE CHARGE, ET PROCÉDÉ DE COMMANDE DE CHARGE

(30) Priority: 29.12.2020 CN 202011589436
(43) Date of publication of application: 08.11.2023
(73) Proprietor: Vivo Mobile Communication Co., Ltd., Dongguan, Guangdong 523863 (CN)
(72) Inventor: GUO, Pengfei, Dongguan, Guangdong 523863 (CN)
(74) Representative: Murgitroyd & Company
(86) International application number: PCT/CN2021/140736
(87) International publication number: WO 2022/143380

(56) References cited:
- WO-A2-2012/106372
- CN-A- 108 390 430
- CN-A- 112 737 028
- CN-U- 211 744 080
- CN-U- 211 744 080
- CN-U- 212 231 119
- CN-U- 212 231 119
- US-A1- 2015 207 353
- US-A1- 2019 372 366

## Description

### TECHNICAL FIELD

The present application belongs to the technical field of communication, and in particular relates to a charging conversion device and a charging control method.

### BACKGROUND

With the development of electronic device technologies, electronic devices have more and more functions. Taking a mobile phone as an example, as the mobile phone has more and more functions, the standby time of the mobile phone is getting shorter and shorter. When the standby time of the mobile phone is getting shorter and shorter, fast charging solutions have emerged. At present, common fast charging protocols include power delivery (power delivery, PD) protocol, quick charge (quick charge, QC) protocol, etc. Different manufacturers can also have their own private fast charging protocols for their own electronic devices, and fast charging protocols configured on electronic devices of different manufacturers are different and are incompatible with each other. As a result, fast charging of electronic devices equipped with private fast charging protocols can only be performed with their adapted chargers, and is inconvenient.

CN211744080U discloses a quick charge protocol conversion circuit including a first interface circuit 1, a selection switch 4, a protocol conversion chip 2 and a second interface circuit 3. The selection switch 4 is a switching switch chip, and is used for selecting whether to connect the protocol conversion chip 2 in series between data ends of the first interface circuit and the second interface circuit 3, so that the circuit can be switched from the protocol conversion mode to a direct mode. A PIN control end of the protocol conversion chip 2 is electrically connected to a controlled end of the switching switch chip.

CN212231119U discloses a multi-protocol input multi-protocol output quick charge cable including a power supply interface circuit for connecting the power supply device, a charging interface circuit for connecting the charging device, a protocol identification circuit for collecting the power supply protocol of the power supply device, an LDO power supply circuit, and a protocol main control circuit. The LDO power supply circuit is provided between the power supply interface circuit and the charging interface circuit. The protocol main control circuit is connected to the protocol identification circuit and the charging interface circuit at the same time, and is used to compare whether the power supply protocol match the charging protocol. The protocol main control circuit is also connected to the LDO power supply circuit, and is used to adjust the output of the power supply device according to the charging protocol when the power supply protocol does not match the charging protocol.

### SUMMARY

The purpose of the embodiment of the present application is to provide a charging conversion device and a charging control method, which can solve the problem that fast charging of electronic devices equipped with private fast charging protocols currently can only be performed with their adapted chargers, and is inconvenient.

To resolve the foregoing technical problem, this application is implemented as follows.

In a first aspect, an embodiment of the present application provides a charging conversion device, and the charging conversion device according to the invention is defined by the appended claim 1.

In a second aspect, an embodiment of the present application provides a charging control method applied to a charging conversion device, and the charging control method according to the invention is defined by the appended claim 9.

In a third aspect, an embodiment of the present application provides a chip, and the chip according to the invention is defined by the appended claim 10.

In a fourth aspect, an embodiment of the present application provides a computer program product, and the computer program product according to the invention is defined by the appended claim 11.

Further preferred embodiments are defined in the dependent claims.

In this embodiment of the application, when the first charging protocol supported by the charging device and the second charging protocol supported by the electrical device are the same, the charging device can charge the electrical device based on the same charging protocol. In this case, the charging conversion device does not need to adjust the output power, that is, the charging module can be in the overvoltage protection mode to protect the electrical device from overvoltage, and the switch module is in the first on state, that is, the charging device and the electrical device can communicate with each other directly to ensure communication efficiency. When the charging device does not have a fast charging protocol, the charging device uses a common charging method (that is, a non-fast charging method) to charge the electronic device to improve charging efficiency, and the switch module is in the first on state, that is, the charging device and the electrical device can communicate with each other directly to ensure communication efficiency. When the first charging protocol is different from the second charging protocol, the switch module is in the second on state, that is, the protocol instruction conversion is performed between the charging device and the electrical device through the charging conversion device, so as to ensure that the charging device can charge the electrical device according to charging requirements of the electrical device through the charging conversion device, so as to realize compatibility between different types of charging devices and electrical devices.

### BRIEF DESCRIPTION OF DRAWINGS

FIG. 1 is a schematic diagram 1 of a charging conversion device according to an embodiment of the present application;
FIG. 2 is a schematic diagram 2 of a charging conversion device according to an embodiment of the present application;
FIG. 3 is a flowchart 1 of a charging control method according to an embodiment of the present application;
FIG. 4 is a flowchart 2 of a charging control method according to an embodiment of the present application;
FIG. 5 is a block diagram of an electronic device according to an embodiment of this application; and
FIG. 6 is a schematic diagram of a hardware structure of an electronic device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some rather than all of the embodiments of this application. Based on the embodiments of this application, all other embodiments obtained by a person of ordinary skill in the art without creative efforts fall within the protection scope of this application.

Terms "first" and "second" in the specification and claims of this application are used to distinguish between similar objects, and do not need to be used to describe a specific order or sequence. It should be understood that, data used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in the specification and the claims, "and/or" represents at least one of connected objects, and a character "/" generally represents an "or" relationship between associated objects.

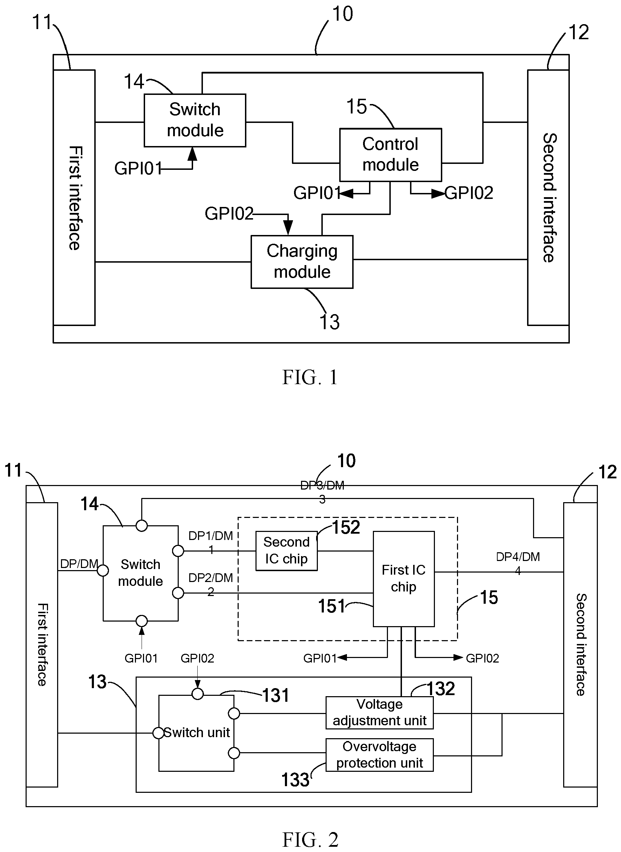

As shown in FIG. 1, an embodiment of the present application provides a charge conversion device 10, and the charge conversion device 10 includes: a first interface 11, a second interface 12, a charging module 13, a switch module 14, and a control module 15.

The first interface 11 is configured to connect a charging device; the second interface 12 is configured to connect an electrical device; the charging module 13 is connected between the first interface 11 and the second interface 12, the charging module 13 is electrically connected to the control module 15; the switch module 14 is connected to the first interface 11, the second interface 12, and the control module 15, and the switch module 14 includes a first on state and a second on state.

The control module 15 is configured to control the switch module 14 to switch between the first on state and the second on state, and control the charging module 13 to switch between an overvoltage protection mode and an output power adjustment mode.

Optionally, in the first on state, the first interface 11 is directly conducted with the second interface 12; and in the second on state, the first interface 11 is conducted with the second interface 12 through the control module 15.

In a case that the charging device charges the electrical device through the charging conversion device 10, if a first charging protocol supported by the charging device is the same as a second charging protocol supported by the electrical device, or if the charging device does not have a fast charging protocol, the switch module 14 is in the first on state, and the charging module 13 is in the overvoltage protection mode; and if the first charging protocol and the second charging protocol are different, the switch module 14 is in the second on state, and the charging module 13 is in the overvoltage protection mode or the output power adjustment mode.

Optionally, the charging conversion device 10 is configured to connect the charging device and the electrical device. When the charging conversion device 10 is connected to the charging device and the electrical device, the charging conversion device 10 is connected in series on a charging circuit of the charging device and the electrical device, and the charging device can charge the electrical device through the charging conversion device 10.

Optionally, the charging device may be a charger, and the electrical device may be a mobile phone, a wearable device, and other devices that have batteries and can be charged.

Optionally, the charging conversion device 10 may be an independent device, and when it is necessary to charge the electrical device, the electrical device may be connected to the charging device through the charging conversion device 10 for charging; or the charging conversion device 10 may also be a charging conversion apparatus of the electrical device, or a charging conversion apparatus in the charging device, which is not limited in this embodiment of the present application.

In the power adjustment mode, the charging module 13 adjusts the output power of the charging device, and outputs the output power to the electrical device; in the overvoltage protection mode, the charging module 13 transmits the output power of the charging device to the electrical device, and protects the electrical device from overvoltage.

Optionally, the charging conversion device 10 identifies the fast charging protocol between the charging device and the electrical device, and performs corresponding power adjustment and conversion according to the content of the protocol between the charging device and the electrical device. Through the conversion of the charging conversion device 10, the compatibility of different charging protocols can be realized, especially the conversion from the public fast charging protocol to the private fast charging protocol can be realized, which improves the user's charging experience.

When the first charging protocol supported by the charging device is the same as the second charging protocol supported by the electrical device, the charging device can charge the electrical device based on the same charging protocol. In this case, the charging conversion device may not adjust the output power, that is, the charging module 13 may be in the overvoltage protection mode, to protect the electrical device from overvoltage. Besides, the switch module 14 is in the first on state, that is, the charging device and the electrical device can communicate with each other directly to ensure communication efficiency.

When the charging device does not have a fast charging protocol, the charging device uses a common charging method (that is, a non-fast charging method) to charge the electrical device to improve charging efficiency. Besides, the switch module 14 is in the first on state, that is, the charging device and the electrical device can communicate with each other directly to ensure communication efficiency.

When the first charging protocol is different from the second charging protocol, the switch module 14 is in the second on state, that is, protocol instruction conversion is performed between the charging device and the electrical device through the charging conversion device, to ensure that the charging device can charge the electrical device in a manner that meets its charging requirements through the charging conversion apparatus, so as to achieve compatibility between different types of charging devices and electrical devices.

Optionally, the control module 15 may include two control terminals, such as a general input/output terminal GPIO1 and GPIO2. Correspondingly, the switch module 14 may have a first control terminal GPIO1 corresponding to the control terminal GPIO1 of the control module 15. The charging module 13 may have a second control terminal GPIO2 corresponding to the control terminal GPIO2 of the control module 15, so that the control module 15 can output corresponding control signals to the charging module 13 and the switch module 14.

Optionally, the switch module 14 has a first terminal, a second terminal, a third terminal, and a first control terminal.

The first terminal is connected to the first interface 11, the second terminal is connected to the second interface 12, and the third terminal is connected to the second interface 12 through the control module 15. In the first on state, the first terminal is conducted with the second terminal; and in the second on state, the first terminal is conducted with the third terminal.

The control module 15 is connected to the first control terminal (for example, the GPIO1 of the control module 15 is connected to the first control terminal GPIO1); and the control module 15 is configured to control, through the first control terminal GPIO1, the switch module 14 to switch between the first on state and the second on state.

Optionally, the switch module 14 may be a single-pole double-throw switch, so that switching of the communication path between the charging device and the electrical device can be realized by controlling the on state of the switch module 14.

Optionally, the switch module 14 may include two switch units, one switch unit is arranged on a communication path. For example, the first interface 11 is connected to the second interface through the first switch unit, and the first interface is connected to the second interface through the second switch unit and the control module 15. The control module 15 is configured to control switch states of the first switch unit and the second switch unit. For example, when identifying that the first charging protocol supported by the charging device is the same as the second charging protocol supported by the electrical device, or the charging device does not have a fast charging protocol, the control module 15 controls the first switch unit to be in the on state and the second switch unit to be in the off state; and when identifying that the first charging protocol is different from the second charging protocol, the control module 15 controls the first switch unit to be in the off state and the second switch unit to be in the on state. This is not limited in the embodiments of the present application.

Optionally, as shown in FIG. 2, the control module 15 includes: a first integrated circuit (IC) chip 151 and a second IC chip 152.

The switch module 14 is connected to the first IC chip 151 and the second IC chip 152, and the first IC chip 151 is connected to the second IC chip 152 and the charging module 13.

The second on state includes a first on sub-state and a second on sub-state; in the first on sub-state, the first interface 11 is conducted with the second interface 12 through the first IC chip 151 and the second IC chip 152; and in the second on sub-state, the first interface 11 is conducted with the second interface 12 through the first IC chip 151.

In a case that the first charging protocol is different from the second charging protocol, and a voltage adjustment method corresponding to the first charging protocol is discrete adjustment, the switch module 14 is in the first on sub-state, and the charging module 13 is in the output power adjustment mode; and in a case that the first charging protocol is different from the second charging protocol, and the voltage adjustment method corresponding to the first charging protocol is continuous adjustment, the switch module 14 is in the second on sub-state, and the charging module 13 is in the overvoltage protection mode.

Optionally, the first IC chip 151 can be configured to identify a private protocol. For example, a private protocol can be charging protocols (such as VFCP protocol) independently used by different manufacturers. The second IC chip 152 can be configured to identify a public protocol, such as charging protocols (such as PD and QC protocols) that can be shared by different manufacturers.

It should be understood that the discrete voltage adjustment method is that the charging voltage is a discrete point, such as 5V, 9V, 12V, or 15V; the continuous voltage adjustment method is that the charging voltage can be switched arbitrarily within a specific voltage range, such as 5V to 20V. Certainly, the charging voltage of this application is not limited to this.

Optionally, in a case that the switch module 14 is in the first on sub-state, the second IC chip 152 is configured to control the charging device to output maximum power, and the first IC chip 151 is configured to control the charging module 13 to adjust, in the output power adjustment mode, the maximum power output by the charging device, and output the adjusted power to the electrical device.

Optionally, in a case that the switch module 14 is in the second on sub-state, the first IC chip 151 is configured to convert a first instruction corresponding to the second charging protocol to a second instruction corresponding to the first charging protocol, and transmit the second instruction to the charging device.

In this way, when the first charging protocol is different from the second charging protocol, and the voltage adjustment method corresponding to the first charging protocol is discrete adjustment, the second IC chip 152 controls the charging device to output the maximum power. When the electrical device needs different power, the first IC chip 151 controls the charging module 13 to output the charging power required by the electrical device, so that fast charging can be performed when the charging sequence is relatively strict. In the case that the first charging protocol is different from the second charging protocol, and the voltage adjustment method corresponding to the first charging protocol is continuous adjustment, the compatibility of different protocols is realized through the conversion of the protocol format, so as to ensure fast charging. In addition, this solution further ensures the charging efficiency by adopting different charging modes for discrete and continuous voltage adjustment methods under different charging protocols.

Optionally, the switch module 14 has a first terminal, a second terminal, a third terminal, a fourth terminal, and a first control terminal.

The first terminal is connected to the first interface 11, the second terminal is connected to the second interface 12, the third terminal is connected to the second interface 12 through the first IC chip 151 and the second IC chip 152, and the fourth terminal is connected to the second interface 12 through the first IC chip 151; and the first IC chip 151 is connected to the first control terminal.

In the first on state, the first terminal is conducted with the second terminal; in the first on sub-state, the first terminal is conducted with the third terminal; and in the second on sub-state, the first terminal is conducted with the fourth terminal.

The first IC chip 151 is configured to control, through the first control terminal, the switch module 14 to switch among the first on state, the first on sub-state, and the second on sub-state.

Optionally, the switch module 14 may be a single-pole double-throw switch, so that switching of the communication path between the charging device and the electrical device can be realized by controlling the on state of the switch module 14.

Optionally, the switch module 14 may include three switch units, one switch unit is arranged on a communication path, such as the first interface 11 is connected to the second interface 12 through the first switch unit, the first interface 11 is connected to the second interface 12 through the second switch unit, the second IC chip 152, and the first IC chip 151; and the first interface 11 is connected to the second interface 12 through the third switch unit and the first IC chip 151.

The control module 15 is configured to control the switch state of the first switch unit, the second switch unit, and the third switch unit. For example, when identifying that the first charging protocol of the charging device and the second charging protocol of the electrical device are the same, or when the charging device does not have a fast charging protocol, the control module 15 controls the first switch unit to be in the on state, and the second switch unit and the third switch unit to be in the off state. When identifying that the first charging protocol is different from the second charging protocol, and the voltage adjustment method corresponding to the first charging protocol is discrete adjustment, the control module 15 controls the first switch unit and the third switch unit to be in the off state, and the second switch unit to be in the on state. When identifying that the first charging protocol is different from the second charging protocol, and the voltage adjustment method corresponding to the first charging protocol is continuous adjustment, the control module 15 controls the first switch unit and the second switch unit to be in the off state, and the third switch unit to be in the on state. The embodiments of the present application are not limited thereto.

Optionally, the charging module 13 includes: a switch unit 131, a voltage adjustment unit 132, and an overvoltage protection unit 133.

The switch unit 131 is connected to the first interface 11, the voltage adjustment unit 132, the overvoltage protection unit 133, and the control module 15, and the voltage adjustment unit 132 and the overvoltage protection units 133 are all connected to the second interface 12.

The switch unit 131 includes a third on state and a fourth on state; in the third on state, the first interface 11 is conducted with the second interface 12 through the voltage adjustment unit 132, and the charging module 13 is in the output power adjustment mode; and in the fourth on state, the first interface 11 is conducted with the second interface 12 through the overvoltage protection unit 133, and the charging module 13 is in the overvoltage protection mode.

The control module 15 is configured to control the switch unit 131 to switch between the third on state and the fourth on state.

Optionally, the control module 15 can be connected to the second control terminal GPIO2 of the switch unit 131 through the control terminal GPIO2, so that the control module 15 can output a corresponding control signal to the switch unit 131 to control the switch unit 131 to switch between the third on state and the fourth on state.

Optionally, the control module 15 can also be connected to the voltage adjustment unit 132, so that when the charging module 13 is in the output power adjustment mode, the control module 15 can control output power of the voltage adjustment unit 132 according to the charging power required by the electrical device.

Optionally, the switch unit 131 has a fifth terminal, a sixth terminal, a seventh terminal, and a second control terminal.

The fifth terminal is connected to the first interface 11, the sixth terminal is connected to the second interface 12 through the voltage adjustment unit 132, and the seventh terminal is connected to the second interface 12 through the overvoltage protection unit 133. In the third on state, the fifth terminal is conducted with the sixth terminal; and in the fourth on state, the fifth terminal is conducted with the seventh terminal.

Optionally, the switch unit 131 may be a single-pole double-throw switch, so that switching of the charging path between the charging device and the electrical device can be realized by controlling the on state of the switch unit 131.

Optionally, the switch unit 131 may include two switch elements, one switch element is arranged on a charging path, for example, the first interface 11 is connected to the second interface 12 through the first switch element and the voltage adjustment unit 132; and the first interface 11 is connected to the second interface 12 through a second switch element and the overvoltage protection unit 133.

The control module 15 is configured to control the switch state of the first switch element and the second switch element. For example, when the control module 15 controls the first switch element to be in the on state and the second switch element to be in the off state, the charging module 13 is in the output power adjustment mode; when the control module 15 controls the first switching element to be in an off state and the second switching element to be in the on state, the charging module 13 is in the overvoltage protection mode.

Optionally, the voltage adjustment unit 132 may include a buck (BUCK) circuit.

Optionally, the first interface 11 has a first data terminal and a first power supply terminal; and the second interface 12 has a second data terminal and a second power supply terminal.

The switch module 14 is connected to the first data terminal and the second data terminal, and the second data terminal is connected to the control module 15. Therefore, the switch module 14 can be used to switch different communication paths when the electrical device and the charging device are connected. The charging module 12 is connected between the first power supply terminal and the second power supply terminal, so as to form a charging circuit when the electrical device and the charging device are connected, so as to ensure that the charging device can charge the electrical device through the charging conversion device 10.

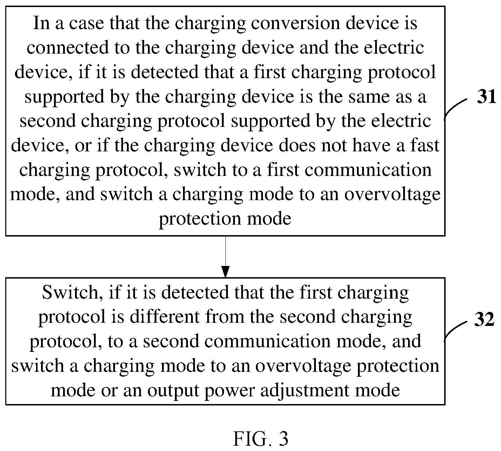

As shown in FIG. 3, the embodiment of the present application provides a charging control method, which is applied to a charging conversion device; the method includes:
Step 31: In a case that the charging conversion device is connected to the charging device and the electrical device, if the charging conversion device detects that a first charging protocol supported by the charging device is the same as a second charging protocol supported by the electrical device, or if the charging device does not have a fast charging protocol, switch to a first communication mode, and switch a charging mode to an overvoltage protection mode.

In the first communication mode, the charging device communicates directly with the electrical device.

Step 32: Switch, if the charging conversion device detects that the first charging protocol is different from the second charging protocol, to a second communication mode, and switch a charging mode to an overvoltage protection mode or an output power adjustment mode.

In the second communication mode, the charging device and the electrical device communicate with each other through the charging conversion device.

In this embodiment, when the first charging protocol supported by the charging device is the same as the second charging protocol supported by the electrical device, the charging device can charge the electrical device based on the same charging protocol. In this case, the charging conversion device may not adjust the output power, that is, the charging module may be in the overvoltage protection mode, to protect the electrical device from overvoltage. Besides, the charging device and the electrical device can communicate with each other directly to ensure communication efficiency. When the charging device does not have a fast charging protocol, the charging device uses a common charging method (that is, a non-fast charging method) to charge the electronic device to improve charging efficiency. Besides, the charging device and the electrical device can communicate with each other directly to ensure communication efficiency. When the first charging protocol is different from the second charging protocol, protocol instruction conversion is performed between the charging device and the electrical device through the charging conversion device, to ensure that the charging device can charge the electrical device according to charging requirements of the electrical device through the charging conversion apparatus, so as to achieve compatibility between different types of charging devices and electrical devices.

Optionally, the switching, if the charging conversion device detects that the first charging protocol is different from the second charging protocol, to a second communication mode, and switching a charging mode to an overvoltage protection mode or an output power adjustment mode includes:
in a case of detecting that the first charging protocol is different from the second charging protocol, and a voltage adjustment method corresponding to the first charging protocol is discrete adjustment, switching to the second communication mode, and switching the charging mode to the output power adjustment mode; and
in a case of detecting that the first charging protocol is different from the second charging protocol, and a voltage adjustment method corresponding to the first charging protocol is continuous adjustment, switching to the second communication mode, and switching the charging mode to the overvoltage protection mode.

Optionally, when the first charging protocol is different from the second charging protocol, and the voltage adjustment method corresponding to the first charging protocol is discrete adjustment, the charging device may be controlled to output the maximum power. When the electrical device needs different power, the charging power required by the electrical device is output through adjustment in the output power adjustment mode, so that fast charging can be performed when the charging sequence is relatively strict.

In the case that the first charging protocol is different from the second charging protocol, and the voltage adjustment method corresponding to the first charging protocol is continuous adjustment, the compatibility of different protocols is realized through the conversion of the protocol format, so as to ensure fast charging.

In this way, this solution further ensures the charging efficiency by adopting different charging modes for discrete and continuous voltage adjustment methods under different charging protocols.

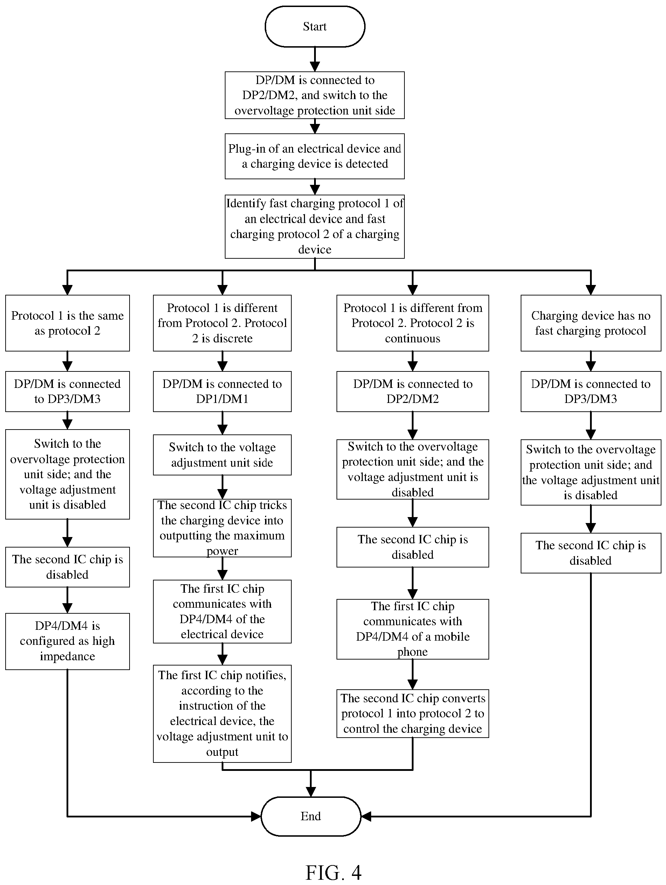

As shown in FIG. 2 and FIG. 4, the charging control method applied to the charging conversion device of the present application will be described in detail below in combination with specific examples:

Description of connection of communication signal line:
When the electrical device is directly connected to the charging device, the communication signal line is DP/DM to DP3/DM3. In a default state of the charging conversion device, the communication signal line is DP/DM to DP2/DM2. When the electrical device is connected to the charging device through the charging conversion device, if the charging conversion device detects that the private protocol supported by the electrical device is protocol 1 and detects that the protocol supported by the charging device is also protocol 1, the charging conversion device controls the switch module through GPIO1, and the communication signal line is switched to DP/DM to DP3/DM3. If the charging protocol supported by the electrical device is protocol 1, but the protocol supported by the charging device does not have protocol 1, and instead protocol 2 of a continuous adjustment method, such as the PPS protocol, the communication method is: the electrical device sends an instruction (such as protocol 1 format) to the first IC chip through DP4/DM4, and then sends an instruction (such as protocol 2 format) to the charging device through DP2/DM2 and DP/DM.

If the charging protocol supported by the electrical device is protocol 1, but the protocol supported by the charging device does not have protocol 1, and instead protocol 3 of discrete adjustment, such as the PD2.0 protocol, the first IC chip controls the control module through GPIO1, to connect DP/DM to DP1/DM1 and communicate with the second IC chip through I2C to control the second IC chip to output the maximum output power of the charger, and controls the voltage adjustment unit to output the charging power required by the electrical device, to perform real-time fast charging.

Description of connection of fast charging power:
By default, the control module switches to the DP2/DM2 side, and the switch unit switches to the overvoltage protection unit side. When the electrical device and the charging device are connected to each other through the charging conversion device, that is, the electrical device and the charging device are inserted into terminals of the charging conversion device, if the first IC chip identifies that the charging protocol supported by the electrical device is protocol 1, the protocol supported by the charging device is protocol 2;
Scenario 1: If protocol 2 is the same as protocol 1, the first IC chip controls the switch module to switch the DP/DM to DP3/DM3 side. In this case, DP4/DM4 is configured as input high-impedance, and a communication packet is monitored. The first IC chip controls the voltage adjustment unit to enter a disabled state, and the first IC chip controls the second IC chip to enter a disabled state, so as to improve charging efficiency.
Scenario 2: If protocol 2 is different from protocol 1 and protocol 2 is a protocol of a discrete adjustment type (such as PD2.0), the first IC chip controls the switch module to switch from DP/DM to DP1/DM1, and controls the voltage adjustment unit to enter the enable state, and the second IC chip enables the charger to output its maximum power through the PD2.0 protocol, such as 20V/3A. In this case, the electrical device sends an instruction to the first IC chip through DP4/DM4, and the first IC chip immediately controls the voltage adjustment unit to output the power required by the electrical device.

As the charging voltage of the electrical device decreases, the first IC chip controls the second IC chip to reduce the output power of the charging device, for example: from the original 10V/3A to 9V/2A.

Specifically, this can be determined according to the power requested by the electrical device. For example, when the electrical device needs high power at the beginning, the input of the voltage adjustment unit provides maximum power. As the power of the electrical device gradually increases, large charging power may not be necessary. In this case, the input of the voltage adjustment unit is reduced accordingly, which can improve the charging efficiency of the voltage adjustment unit and reduce heat generation.

Scenario 3: If protocol 2 is different from protocol 1 and protocol 2 is a protocol of a continuous adjustment type (such as PPS protocol), the first IC chip controls the control module to switch DP/DM to DP2/DM2. In this case, the first IC chip receives a private instruction (such as protocol 1) of the electrical device through DP4 /DM4, and the first IC chip converts the private instruction into protocol 2 (such as PPS format) instruction and sends it to the charging device for fast charging. In addition, the first IC chip controls the voltage adjustment unit to enter the disabled state, and the first IC chip controls the second IC chip to enter the disabled state, so as to improve charging efficiency.

Scenario 4: If the charging device does not have a fast charging protocol, the first IC chip switches DP/DM to DP3/DM3, and the first IC chip controls the voltage adjustment unit to enter the disabled state, and controls the second IC chip to enter the disabled state to improve charging efficiency.

The specific process is as follows:
In a default state, DP/DM is connected to DP2/DM2, and the switch unit is switched to the overvoltage protection unit side.

First, the charging conversion device identifies the fast charging protocol 1 supported by the electrical device and the fast charging protocol 2 supported by the charging device. There are four types of fast charging protocol 2: the same protocol 1, discrete protocol, continuous protocol, and no protocol.

If the protocols of the charging device and the electrical device are the same, the charging conversion device controls the direct connection between the electrical device and the charging device. In order to improve the charging efficiency, the charging conversion device is in the disabled state.

If the protocol of the charging device is different from that of the electrical device, the protocol of the charging device is discrete (such as PD2.0), the second IC chip is connected to the charging device and outputs the maximum power of the charging device, while the charging power of the electrical device is realized by the first IC chip by controlling the voltage adjustment unit.

If the protocol of the charging device is different from that of the electrical device and the protocol of the charging device is continuous (such as PPS), the first IC chip performs protocol conversion, and converts the protocol 1 into the protocol 2 for fast charging. The voltage adjustment unit and the second IC chip are in the disabled state.

When the charging device has no protocol, the charging conversion device controls the direct connection between the electrical device and the charging device, and the voltage adjustment unit and the second IC chip are in the disabled state.

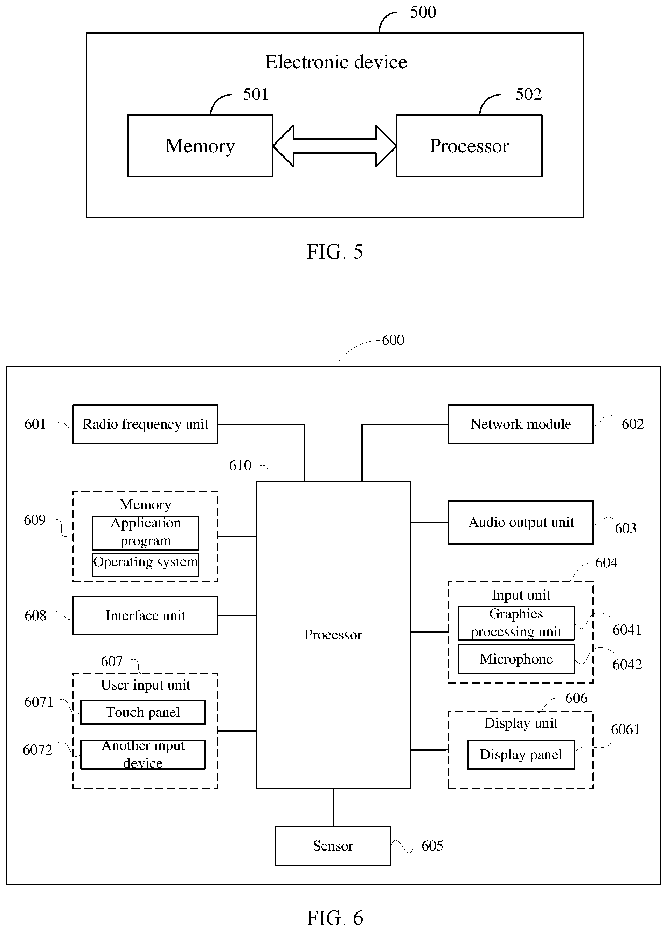

Optionally, as shown in FIG. 5, the embodiments of the present application further provide an electronic device 500, including a processor 501, a memory 502, and a program or instruction stored in the memory 502 and executable on the processor 501, When the program or instruction is executed by the processor 501, each process of the charging control method embodiment described above can be realized, and the same technical effect can be achieved. To avoid repetition, details are not repeated here.

It should be noted that the electronic device in this embodiment of this application includes the foregoing mobile electronic device and the foregoing non-mobile electronic device.

FIG. 6 is a schematic structural diagram of hardware of an electronic device according to an embodiment of this application.

The electronic device 600 includes, but is not limited to: a radio frequency unit 601, a network module 602, an audio output unit 603, an input unit 604, a sensor 605, a display unit 606, a user input unit 607, an interface unit 608, a memory 609, a processor 610, etc.

A person skilled in the art can understand that the electronic device 600 may further include a power supply (such as a battery) that supplies power to each component. The power supply may be logically connected to the processor 610 by using a power supply management system, to implement functions such as charging and discharging management, and power consumption management by using the power supply management system. The structure of the electronic device shown in FIG. 6 does not constitute a limitation on the electronic device. The electronic device may include components more or fewer components than those shown in the diagram, a combination of some components, or different component arrangements. Details are not described herein.

The processor 610 is configured to: in a case that the charging conversion device is connected to the charging device and the electrical device, if the charging conversion device detects that a first charging protocol supported by the charging device is the same as a second charging protocol supported by the electrical device, or if the charging device does not have a fast charging protocol, switch to a first communication mode, and switch a charging mode to an overvoltage protection mode; if the charging conversion device detects that the first charging protocol is different from the second charging protocol, switch to a second communication mode, and switch a charging mode to an overvoltage protection mode or an output power adjustment mode; where in the first communication mode, the charging device communicates directly with the electrical device; and in the second communication mode, the charging device and the electrical device communicate with each other through the charging conversion device.

Optionally, the processor 610 is further configured to: in a case of detecting that the first charging protocol is different from the second charging protocol, and a voltage adjustment method corresponding to the first charging protocol is discrete adjustment, switch to the second communication mode, and switch the charging mode to the output power adjustment mode; and in a case of detecting that the first charging protocol is different from the second charging protocol, and a voltage adjustment method corresponding to the first charging protocol is continuous adjustment, switch to the second communication mode, and switch the charging mode to the overvoltage protection mode.

It should be understood that, in this embodiment of this application, the input unit 604 may include a graphics processing unit (Graphics Processing Unit, GPU) 6041 and a microphone 6042, and the graphics processing unit 6041 processes image data of a still picture or a video obtained by an image capture apparatus (such as a camera) in a video capture mode or an image capture mode. The display unit 606 may include a display panel 6061, and the display panel 6061 may be configured in a form of a liquid crystal display, an organic light emitting diode, or the like. The user input unit 607 includes a touch panel 6071 and another input device 6072. The touch panel 6071 is also referred to as a touchscreen. The touch panel 6071 may include two parts: a touch detection apparatus and a touch controller. The another input device 6072 may include but is not limited to a physical keyboard, a functional button (such as a volume control button or a power on/off button), a trackball, a mouse, and a joystick. Details are not described herein. The memory 609 may be configured to store a software program and various pieces of data, including but not limited to an application and an operating system. An application processor and a modem processor may be integrated into the processor 610. The application processor mainly processes an operating system, a user interface, an application, and the like. The modem processor mainly processes wireless communication. It can be understood that, alternatively, the modem processor may not be integrated into the processor 610.

An embodiment of the present application further provides a readable storage medium. The readable storage medium stores a program or an instruction, and when the program or the instruction is executed by a processor, the various processes of the foregoing charging control method embodiment is performed and the same technical effects can be achieved. To avoid repetition, details are not described herein again.

The processor is a processor in the electronic device in the foregoing embodiment. The readable storage medium includes a computer-readable storage medium such as a read-only memory (Read-Only Memory, ROM), a random access memory (Random Access Memory, RAM), a magnetic disk, an optical disc, or the like.

An embodiment of the present application further provides a chip, the chip includes a processor and a communication interface, the communication interface is coupled to the processor, and the processor is configured to execute programs or instructions to implement each process of the embodiment of the foregoing charging control method and the same technical effects can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that a scope of the method and the apparatus in the embodiments of this application is not limited to: performing a function in a sequence shown or discussed, and may further include: performing a function in a basically simultaneous manner or in a reverse sequence based on an involved function. For example, the described method may be performed in a different order, and various steps may be added, omitted, or combined. In addition, features described with reference to some examples may be combined in other examples.

According to the descriptions of the foregoing implementations, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of this application essentially, or the part contributing to the prior art may be implemented in a form of a software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of this application.

The embodiments of this application are described with reference to the accompanying drawings. However, this application is not limited to the foregoing specific implementations. The foregoing specific implementations are merely examples, but are not limiting. A person of ordinary skill in the art may make many forms without departing from the scope of the claims of this application.

## Claims

1. A charging conversion device (10), comprising: a first interface (11), a second interface (12), a charging module (13), a switch module (14), and a control module (15); wherein
the first interface (11) is used to connect to a charging device;
the second interface (12) is used to connect to an electrical device;
the charging module (13) is connected between the first interface (11) and the second interface (12), and the charging module (13) is electrically connected to the control module (15);
the switch module (14) is connected to the first interface (11), the second interface (12), and the control module (15), and the switch module (14) comprises a first on state and a second on state; and
the control module (15) is configured to control the switch module (14) to switch between the first on state and the second on state, and control the charging module (13) to switch between an overvoltage protection mode and an output power adjustment mode;
wherein in a case that the charging conversion device (10) is connected to the charging device and the electrical device, if a first charging protocol supported by the charging device is same as a second charging protocol supported by the electrical device, or if the charging device does not have a fast charging protocol, the switch module (14) is in the first on state, and the charging module (13) is in the overvoltage protection mode; and if the first charging protocol and the second charging protocol are different, the switch module (14) is in the second on state, and the charging module (13) is in the overvoltage protection mode or the output power adjustment mode; **characterised in that**
the control module (15) comprises: a first integrated circuit, IC, chip (151) and a second IC chip (152);
the switch module (14) is connected to the first IC chip (151) and the second IC chip (152), and the first IC chip (151) is connected to the second IC chip (152) and the charging module (13); and
the second on state comprises a first on sub-state and a second on sub-state; in the first on sub-state, the first interface (11) is conducted with the second interface (12) through the first IC chip (151) and the second IC chip (152); and in the second on sub-state, the first interface (11) is conducted with the second interface (12) through the first IC chip (151);
wherein in a case that the first charging protocol is different from the second charging protocol, and a voltage adjustment method corresponding to the first charging protocol is discrete adjustment, the switch module (14) is in the first on sub-state, and the charging module (13) is in the output power adjustment mode; and in a case that the first charging protocol is different from the second charging protocol, and the voltage adjustment method corresponding to the first charging protocol is continuous adjustment, the switch module (14) is in the second on sub-state, and the charging module (13) is in the overvoltage protection mode.

2. The charging conversion device (10) according to claim 1, wherein in the first on state, the first interface (11) is directly conducted with the second interface (12); and in the second on state, the first interface (11) is conducted with the second interface (12) through the control module (15).

3. The charging conversion device (10) according to claim 1, wherein in a case that the switch module (14) is in the first on sub-state, the second IC chip (152) is configured to control the charging device to output maximum power, and the first IC chip (151) is configured to control the charging module (13) to adjust, in the output power adjustment mode, the maximum power output by the charging device, and output adjusted power to the electrical device.

4. The charging conversion device (10) according to claim 1, wherein in a case that the switch module (14) is in the second on sub-state, the first IC chip (151) is configured to convert a first instruction corresponding to the second charging protocol to a second instruction corresponding to the first charging protocol, and transmit the second instruction to the charging device.

5. The charging conversion device (10) according to claim 1, wherein the switch module (14) has a first terminal, a second terminal, a third terminal, a fourth terminal, and a first control terminal;
the first terminal is connected to the first interface (11), the second terminal is connected to the second interface (12), the third terminal is connected to the second interface (12) through the first IC chip (151) and the second IC chip (152), and the fourth terminal is connected to the second interface (12) through the first IC chip (151); and the first IC chip (151) is connected to the first control terminal;
in the first on state, the first terminal is conducted with the second terminal; in the first on sub-state, the first terminal is conducted with the third terminal; and in the second on sub-state, the first terminal is conducted with the fourth terminal; and
the first IC chip (151) is configured to control, through the first control terminal, the switch module (14) to switch among the first on state, the first on sub-state, and the second on sub-state.

6. The charging conversion device (10) according to claim 1, wherein the charging module (13) comprises: a switch unit (131), a voltage adjustment unit (132), and an overvoltage protection unit (133);
the switch unit (131) is connected to the first interface (11), the voltage adjustment unit (132), the overvoltage protection unit (133), and the control module (15), and both the voltage adjustment unit (132) and the overvoltage protection unit (133) are connected to the second interface (12);
the switch unit (131) comprises a third on state and a fourth on state; in the third on state, the first interface (11) is conducted with the second interface (12) through the voltage adjustment unit (132), and the charging module (13) is in the output power adjustment mode; and in the fourth on state, the first interface (11) is conducted with the second interface (12) through the overvoltage protection unit (133), and the charging module (13) is in the overvoltage protection mode; and
the control module (15) is configured to control the switch unit (131) to switch between the third on state and the fourth on state.

7. The charging conversion device (10) according to claim 6, wherein the switch unit (131) has a fifth terminal, a sixth terminal, a seventh terminal, and a second control terminal;
the fifth terminal is connected to the first interface (11), the sixth terminal is connected to the second interface (12) through the voltage adjustment unit (132), and the seventh terminal is connected to the second interface (12) through the overvoltage protection unit (133); and
in the third on state, the fifth terminal is conducted with the sixth terminal; and in the fourth on state, the fifth terminal is conducted with the seventh terminal.

8. The charging conversion device (10) according to claim 1, wherein the first interface (11) has a first data terminal and a first power supply terminal; and the second interface (12) has a second data terminal and a second power supply terminal;
the switch module (14) is connected to the first data terminal and the second data terminal, and the second data terminal is connected to the control module (15); and
the charging module (13) is connected between the first power supply terminal and the second power supply terminal.

9. A charging control method, performed by a charging conversion device and comprising:
in a case that the charging conversion device is connected to a charging device and an electrical device, if the charging conversion device detects that a first charging protocol supported by the charging device is same as a second charging protocol supported by the electrical device, or if the charging device does not have a fast charging protocol, switching (31) to a first communication mode, and switching (31) a charging mode to an overvoltage protection mode; and
switching (32), if the charging conversion device detects that the first charging protocol is different from the second charging protocol, to a second communication mode, and switching (32) a charging mode to an overvoltage protection mode or an output power adjustment mode;
wherein in the first communication mode, the charging device communicates directly with the electrical device; and
in the second communication mode, the charging device and the electrical device communicate with each other through the charging conversion device;
**characterised in that** the switching (32), if the charging conversion device detects that the first charging protocol is different from the second charging protocol, to a second communication mode, and switching (32) a charging mode to an overvoltage protection mode or an output power adjustment mode comprises:
in a case of detecting that the first charging protocol is different from the second charging protocol, and a voltage adjustment method corresponding to the first charging protocol is discrete adjustment, switching to the second communication mode, and switching the charging mode to the output power adjustment mode; and
in a case of detecting that the first charging protocol is different from the second charging protocol, and a voltage adjustment method corresponding to the first charging protocol is continuous adjustment, switching to the second communication mode, and switching the charging mode to the overvoltage protection mode.

10. A chip, comprising a processor and a communication interface, wherein the communication interface is coupled to the processor, and the processor is configured to execute a program or an instruction to implement steps of the charging control method according to claim 9.

11. A computer program product, wherein the computer program product is stored in a non-volatile storage medium, and the computer program product is executed by at least one processor (610) to implement steps of the charging control method according to claim 9.

## Patentansprüche

1. Eine Ladeumwandlungsvorrichtung (10), die Folgendes beinhaltet: eine erste Schnittstelle (11), eine zweite Schnittstelle (12), ein Lademodul (13), ein Schaltmodul (14) und ein Steuerungsmodul (15); wobei
die erste Schnittstelle (11) verwendet wird, um mit einer Ladevorrichtung verbunden zu werden;
die zweite Schnittstelle (12) verwendet wird, um mit einer elektrischen Vorrichtung verbunden zu werden;
das Lademodul (13) zwischen der ersten Schnittstelle (11) und der zweiten Schnittstelle (12) verbunden ist und das Lademodul (13) mit dem Steuerungsmodul (15) elektrisch verbunden ist;
das Schaltmodul (14) mit der ersten Schnittstelle (11), der zweiten Schnittstelle (12) und dem Steuerungsmodul (15) verbunden ist und das Schaltmodul (14) einen ersten Ein-Zustand und einen zweiten Ein-Zustand beinhaltet; und
das Steuerungsmodul (15) konfiguriert ist, um das Schaltmodul (14) zu steuern, zwischen dem ersten Ein-Zustand und dem zweiten Ein-Zustand zu schalten und das Lademodul (13) zu steuern, zwischen einem Überspannungsschutzmodus und einem Ausgangsleistungsanpassungsmodus zu schalten;
wobei in einem Fall, in dem die Ladeumwandlungsvorrichtung (10) mit der Ladevorrichtung und der elektrischen Vorrichtung verbunden ist, wenn ein erstes Ladeprotokoll, das von der Ladevorrichtung unterstützt wird, dasselbe ist wie ein zweites Ladeprotokoll, das von der elektrischen Vorrichtung unterschützt wird, oder wenn die Ladevorrichtung kein Schnellladeprotokoll aufweist, das Schaltmodul (14) in dem ersten Ein-Zustand ist und das Lademodul (13) in dem Überspannungsschutzmodus ist; und, wenn das erste Ladeprotokoll und das zweite Ladeprotokoll unterschiedlich sind, das Schaltmodul (14) in dem zweiten Ein-Zustand ist und das Lademodul (13) in dem Überspannungsschutzmodus oder dem Ausgangsleistungsanpassungsmodus ist; **dadurch gekennzeichnet, dass** das Steuerungsmodul (15) Folgendes beinhaltet: einen ersten Chip (151) mit integrierter Schaltung, IC, und einen zweiten IC-Chip (152);
das Schaltmodul (14) mit dem ersten IC-Chip (151) und dem zweiten IC-Chip (152) verbunden ist und der erste IC-Chip (151) mit dem zweiten IC-Chip (152) und dem Lademodul (13) verbunden ist; und
der zweite Ein-Zustand einen ersten Ein-Unterzustand und einen zweiten Ein-Unterzustand beinhaltet; die erste Schnittstelle (11) in dem ersten Ein-Unterzustand durch den ersten IC-Chip (151) und den zweiten IC-Chip (152) mit der zweiten Schnittstelle (12) durchgeschaltet ist; und die erste Schnittstelle (11) in dem zweiten Ein-Unterzustand durch den ersten IC-Chip (151) mit der zweiten Schnittstelle (12) durchgeschaltet ist;
wobei in einem Fall, in dem das erste Ladeprotokoll sich von dem zweiten Ladeprotokoll unterscheidet und ein Spannungsanpassungsverfahren, das dem ersten Ladeprotokoll entspricht, diskrete Anpassung ist, das Schaltmodul (14) in dem ersten Ein-Unterzustand ist und das Lademodul (13) in dem Ausgangsleistungsanpassungsmodus ist; und in einem Fall, in dem das erste Ladeprotokoll sich von dem zweiten Ladeprotokoll unterscheidet und das Spannungsanpassungsverfahren, das dem ersten Ladeprotokoll entspricht, stufenlose Anpassung ist, das Schaltmodul (14) in dem zweiten Ein-Unterzustand ist und das Lademodul (13) in dem Überspannungsschutzmodus ist.

2. Ladeumwandlungsvorrichtung (10) gemäß Anspruch 1, wobei die erste Schnittstelle (11) in dem ersten Ein-Zustand mit der zweiten Schnittstelle (12) direkt durchgeschaltet ist; und die erste Schnittstelle (11) in dem zweiten Ein-Zustand durch das Steuerungsmodul (15) mit der zweiten Schnittstelle (12) durchgeschaltet ist.

3. Ladeumwandlungsvorrichtung (10) gemäß Anspruch 1, wobei in einem Fall, in dem das Schaltmodul (14) in dem ersten Ein-Unterzustand ist, der zweite IC-Chip (152) konfiguriert ist, um die Ladevorrichtung zu steuern, Höchstleistung auszugeben, und der erste IC-Chip (151) konfiguriert ist, um das Lademodul (13) zu steuern, in dem Ausgangsleistungsanpassungsmodus die Höchstleistungsausgabe durch die Ladevorrichtung anzupassen und angepasste Leistung an die elektrische Vorrichtung auszugeben.

4. Ladeumwandlungsvorrichtung (10) gemäß Anspruch 1, wobei in einem Fall, in dem das Schaltmodul (14) in dem zweiten Ein-Unterzustand ist, der erste IC-Chip (151) konfiguriert ist, um eine erste Anweisung, die dem zweiten Ladeprotokoll entspricht, in eine zweite Anweisung, die dem ersten Ladeprotokoll entspricht, umzuwandeln und die zweite Anweisung an die Ladevorrichtung zu übertragen.

5. Ladeumwandlungsvorrichtung (10) gemäß Anspruch 1, wobei das Schaltmodul (14) einen ersten Anschluss, einen zweiten Anschluss, einen dritten Anschluss, einen vierten Anschluss und einen ersten Steuerungsanschluss aufweist;
der erste Anschluss mit der ersten Schnittstelle (11) verbunden ist, der zweite Anschluss mit der zweiten Schnittstelle (12) verbunden ist, der dritte Anschluss durch den ersten IC-Chip (151) und den zweiten IC-Chip (152) mit der zweiten Schnittstelle (12) verbunden ist und der vierte Anschluss durch den ersten IC-Chip (151) mit der zweiten Schnittstelle (12) verbunden ist; und der erste IC-Chip (151) mit dem ersten Steuerungsanschluss verbunden ist;
der erste Anschluss in dem ersten Ein-Zustand mit dem zweiten Anschluss durchgeschaltet ist; der erste Anschluss in dem ersten Ein-Unterzustand mit dem dritten Anschluss durchgeschaltet ist; und der erste Anschluss in dem zweiten Ein-Unterzustand mit dem vierten Anschluss durchgeschaltet ist; und
der erste IC-Chip (151) konfiguriert ist, um durch den ersten Steuerungsanschluss das Schaltmodul (14) zu steuern, zwischen dem ersten Ein-Zustand, dem ersten Ein-Unterzustand und dem zweiten Ein-Unterzustand zu schalten.

6. Ladeumwandlungsvorrichtung (10) gemäß Anspruch 1, wobei das Lademodul (13) Folgendes beinhaltet: eine Schalteinheit (131), eine Spannungsanpassungseinheit (132) und eine Überspannungsschutzeinheit (133);
die Schalteinheit (131) mit der ersten Schnittstelle (11), der Spannungsanpassungseinheit (132), der Überspannungsschutzeinheit (133) und dem Steuerungsmodul (15) verbunden ist und sowohl die Spannungsanpassungseinheit (132) als auch die Überspannungsschutzeinheit (133) mit der zweiten Schnittstelle (12) verbunden sind;
die Schalteinheit (131) einen dritten Ein-Zustand und einen vierten Ein-Zustand beinhaltet; die erste Schnittstelle (11) in dem dritten Ein-Zustand durch die Spannungsanpassungseinheit (132) mit der zweiten Schnittstelle (12) durchgeschaltet ist und das Lademodul (13) in dem Ausgangsleistungsanpassungsmodus ist; und die erste Schnittstelle (11) in dem vierten Ein-Zustand durch die Überspannungsschutzeinheit (133) mit der zweiten Schnittstelle (12) durchgeschaltet ist und das Lademodul (13) in dem Überspannungsschutzmodus ist; und
das Steuerungsmodul (15) konfiguriert ist, um die Schalteinheit (131) zu steuern, zwischen dem dritten Ein-Zustand und dem vierten Ein-Zustand zu schalten.

7. Ladeumwandlungsvorrichtung (10) gemäß Anspruch 6, wobei die Schalteinheit (131) einen fünften Anschluss, einen sechsten Anschluss, einen siebten Anschluss und einen zweiten Steuerungsanschluss aufweist;
der fünfte Anschluss mit der ersten Schnittstelle (11) verbunden ist, der sechste Anschluss durch die Spannungsanpassungseinheit (132) mit der zweiten Schnittstelle (12) verbunden ist und der siebte Anschluss durch die Überspannungsschutzeinheit (133) mit der zweiten Schnittstelle (12) verbunden ist; und
der fünfte Anschluss in dem dritten Ein-Zustand mit dem sechsten Anschluss durchgeschaltet ist; und der fünfte Anschluss in dem vierten Ein-Zustand mit dem siebten Anschluss durchgeschaltet ist.

8. Ladeumwandlungsvorrichtung (10) gemäß Anspruch 1, wobei die erste Schnittstelle (11) ein erstes Datenendgerät und einen ersten Leistungsversorgungsanschluss aufweist; und die zweite Schnittstelle (12) ein zweites Datenendgerät und einen zweiten Leistungsversorgungsanschluss aufweist;
das Schaltmodul (14) mit dem ersten Datenendgerät und dem zweiten Datenendgerät verbunden ist und das zweite Datenendgerät mit dem Steuerungsmodul (15) verbunden ist; und
das Lademodul (13) zwischen dem ersten Leistungsversorgungsanschluss und dem zweiten Leistungsversorgungsanschluss verbunden ist.

9. Ein Ladesteuerungsverfahren, das von einer Ladeumwandlungsvorrichtung durchgeführt wird und Folgendes beinhaltet:
in einem Fall, in dem die Ladeumwandlungsvorrichtung mit einer Ladevorrichtung und einer elektrischen Vorrichtung verbunden ist, wenn die Ladeumwandlungsvorrichtung erkennt, dass ein erstes Ladeprotokoll, das von der Ladevorrichtung unterstützt wird, dasselbe ist wie ein zweites Ladeprotokoll, das von der elektrischen Vorrichtung unterstützt wird, oder wenn die Ladevorrichtung kein Schnellladeprotokoll aufweist, Schalten (31) in einen ersten Kommunikationsmodus und Schalten (31) eines Lademodus in einen Überspannungsschutzmodus; und
Schalten (32), wenn die Ladeumwandlungsvorrichtung erkennt, dass das erste Ladeprotokoll sich von dem zweiten Ladeprotokoll unterscheidet, in einen zweiten Kommunikationsmodus und Schalten (32) eines Lademodus in einen Überspannungsschutzmodus oder einen Ausgangsleistungsanpassungsmodus;
wobei die Ladevorrichtung in dem ersten Kommunikationsmodus direkt mit der elektrischen Vorrichtung kommuniziert; und
die Ladevorrichtung und die elektrische Vorrichtung in dem zweiten Kommunikationsmodus durch die Ladeumwandlungsvorrichtung miteinander kommunizieren;
**dadurch gekennzeichnet, dass**
das Schalten (32), wenn die Ladeumwandlungsvorrichtung erkennt, dass das erste Ladeprotokoll sich von dem zweiten Ladeprotokoll unterscheidet, in einen zweiten Kommunikationsmodus und Schalten (32) eines Lademodus in einen Überspannungsschutzmodus oder einen Ausgangsleistungsanpassungsmodus, Folgendes beinhaltet:
im Fall des Erkennens, dass das erste Ladeprotokoll sich von dem zweiten Ladeprotokoll unterscheidet und ein Spannungsanpassungsverfahren, das dem ersten Ladeprotokoll entspricht, diskrete Anpassung ist, Schalten in den zweiten Kommunikationsmodus und Schalten des Lademodus in den Ausgangsleistungsanpassungsmodus; und
im Fall des Erkennens, dass das erste Ladeprotokoll sich von dem zweiten Ladeprotokoll unterscheidet und ein Spannungsanpassungsverfahren, das dem ersten Ladeprotokoll entspricht, stufenlose Anpassung ist, Schalten in den zweiten Kommunikationsmodus und Schalten des Lademodus in den Überspannungsschutzmodus.

10. Ein Chip, der einen Prozessor und eine Kommunikationsschnittstelle beinhaltet, wobei die Kommunikationsschnittstelle mit dem Prozessor gekoppelt ist und der Prozessor konfiguriert ist, um ein Programm oder eine Anweisung auszuführen, um Schritte des Ladesteuerungsverfahrens gemäß Anspruch 9 zu implementieren.

11. Ein Computerprogrammprodukt, wobei das Computerprogrammprodukt in einem nichtflüchtigen Speichermedium gespeichert ist und das Computerprogrammprodukt durch mindestens einen Prozessor (610) ausgeführt wird, um Schritte des Ladesteuerungsverfahrens gemäß Anspruch 9 zu implementieren.

## Revendications

1. Un dispositif de conversion de charge (10), comprenant : une première interface (11), une deuxième interface (12), un module de charge (13), un module de commutation (14), et un module de commande (15) ; où
la première interface (11) est utilisée pour se connecter à un dispositif de charge ;
la deuxième interface (12) est utilisée pour se connecter à un dispositif électrique ;
le module de charge (13) est connecté entre la première interface (11) et la deuxième interface (12), et le module de charge (13) est électriquement connecté au module de commande (15) ;
le module de commutation (14) est connecté à la première interface (11), à la deuxième interface (12), et au module de commande (15), et le module de commutation (14) comprend un premier état de marche et un deuxième état de marche ; et
le module de commande (15) est configuré pour commander le module de commutation (14) afin qu'il commute entre le premier état de marche et le deuxième état de marche, et commander le module de charge (13) afin qu'il commute entre un mode protection contre les surtensions et un mode ajustement de puissance de sortie ;
où, dans un cas où le dispositif de conversion de charge (10) est connecté au dispositif de charge et au dispositif électrique, si un premier protocole de charge supporté par le dispositif de charge est identique à un deuxième protocole de charge supporté par le dispositif électrique, ou si le dispositif de charge n'a pas de protocole de charge rapide, le module de commutation (14) se trouve dans le premier état de marche, et le module de charge (13) se trouve en mode protection contre les surtensions ; et si le premier protocole de charge et le deuxième protocole de charge sont différents, le module de commutation (14) se trouve dans le deuxième état de marche, et le module de charge (13) se trouve en mode protection contre les surtensions ou en mode ajustement de puissance de sortie ; **caractérisé en ce que**
le module de commande (15) comprend : une première puce de circuit intégré, CI, (151) et une deuxième puce de CI (152) ;
le module de commutation (14) est connecté à la première puce de CI (151) et à la deuxième puce de CI (152), et la première puce de CI (151) est connectée à la deuxième puce de CI (152) et au module de charge (13) ; et
le deuxième état de marche comprend un premier sous-état de marche et un deuxième sous-état de marche ; dans le premier sous-état de marche, la première interface (11) est reliée à la deuxième interface (12) par l'intermédiaire de la première puce de CI (151) et de la deuxième puce de CI (152) ; et dans le deuxième sous-état de marche, la première interface (11) est reliée à la deuxième interface (12) par l'intermédiaire de la première puce de CI (151) ;
où, dans un cas où le premier protocole de charge est différent du deuxième protocole de charge, et qu'un procédé d'ajustement de tension correspondant au premier protocole de charge est un ajustement discret, le module de commutation (14) se trouve dans le premier sous-état de marche, et le module de charge (13) se trouve en mode ajustement de puissance de sortie ; et dans un cas où le premier protocole de charge est différent du deuxième protocole de charge, et que le procédé d'ajustement de tension correspondant au premier protocole de charge est un ajustement continu, le module de commutation (14) se trouve dans le deuxième sous-état de marche, et le module de charge (13) se trouve en mode protection contre les surtensions.

2. Le dispositif de conversion de charge (10) selon la revendication 1, où, dans le premier état de marche, la première interface (11) est directement reliée à la deuxième interface (12) ; et dans le deuxième état de marche, la première interface (11) est reliée à la deuxième interface (12) par l'intermédiaire du module de commande (15).

3. Le dispositif de conversion de charge (10) selon la revendication 1, où, dans un cas où le module de commutation (14) se trouve dans le premier sous-état de marche, la deuxième puce de CI (152) est configurée pour commander le dispositif de charge afin qu'il émette une puissance maximale, et la première puce de CI (151) est configurée pour commander le module de charge (13) afin qu'il ajuste, en mode ajustement de puissance de sortie, la puissance maximale sortie par le dispositif de charge, et émette une puissance ajustée vers le dispositif de charge.

4. Le dispositif de conversion de charge (10) selon la revendication 1, où, dans un cas où le module de commutation (14) se trouve dans le deuxième sous-état de marche, la première puce de CI (151) est configurée pour convertir une première instruction correspondant au deuxième protocole de charge en une deuxième instruction correspondant au premier protocole de charge, et transmettre la deuxième instruction au dispositif de charge.

5. Le dispositif de conversion de charge (10) selon la revendication 1, où le module de commutation (14) a un premier terminal, un deuxième terminal, un troisième terminal, un quatrième terminal, et un premier terminal de commande ;
le premier terminal est connecté à la première interface (11), le deuxième terminal est connecté à la deuxième interface (12), le troisième terminal est connecté à la deuxième interface (12) par l'intermédiaire de la première puce de CI (151) et de la deuxième puce de CI (152), et le quatrième terminal est connecté à la deuxième interface (12) par l'intermédiaire de la première puce de CI (151) ; et la première puce de CI (151) est connectée au premier terminal de commande ;
dans le premier état de marche, le premier terminal est relié au deuxième terminal ; dans le premier sous-état de marche, le premier terminal est relié au troisième terminal ; et dans le deuxième sous-état de marche, le premier terminal est relié au quatrième terminal ; et
la première puce de CI (151) est configurée pour commander, par l'intermédiaire du premier terminal de commande, le module de commutation (14) afin qu'il commute entre le premier état de marche, le premier sous-état de marche, et le deuxième sous-état de marche.

6. Le dispositif de conversion de charge (10) selon la revendication 1, où le module de charge (13) comprend : une unité de commutation (131), une unité d'ajustement de tension (132), et une unité de protection contre les surtensions (133) ;
l'unité de commutation (131) est connectée à la première interface (11), à l'unité d'ajustement de tension (132), à l'unité de protection contre les surtensions (133), et au module de commande (15), de même que l'unité d'ajustement de tension (132) et l'unité de protection contre les surtensions (133) sont toutes deux connectées à la deuxième interface (12) ;
l'unité de commutation (131) comprend un troisième état de marche et un quatrième état de marche ; dans le troisième état de marche, la première interface (11) est reliée à la deuxième interface (12) par l'intermédiaire de l'unité d'ajustement de tension (132), et le module de charge (13) est en mode ajustement de puissance de sortie ; et dans le quatrième état de marche, la première interface (11) est reliée à la deuxième interface (12) par l'intermédiaire de l'unité de protection contre les surtensions (133), et le module de charge (13) est en mode protection contre les surtensions ; et
le module de commande (15) est configuré pour commander l'unité de commutation (131) pour qu'elle commute entre le troisième état de marche et le quatrième état de marche.

7. Le dispositif de conversion de charge (10) selon la revendication 6, où l'unité de commutation (131) a un cinquième terminal, un sixième terminal, un septième terminal, et un deuxième terminal de commande ;
le cinquième terminal est connecté à la première interface (11), le sixième terminal est connecté à la deuxième interface (12) par l'intermédiaire de l'unité d'ajustement de tension (132), et le septième terminal est connecté à la deuxième interface (12) par l'intermédiaire de l'unité de protection contre les surtensions (133) ; et
dans le troisième état de marche, le cinquième terminal est relié au sixième terminal ; et dans le quatrième état de marche, le cinquième terminal est relié au septième terminal.

8. Le dispositif de conversion de charge (10) selon la revendication 1, où la première interface (11) a un premier terminal de données et un premier terminal d'alimentation électrique ; et la deuxième interface (12) a un deuxième terminal de données et un deuxième terminal d'alimentation électrique ;
le module de commutation (14) est connecté au premier terminal de données et au deuxième terminal de données, et le deuxième terminal de données est connecté au module de commande (15) ; et
le module de charge (13) est connecté entre le premier terminal d'alimentation électrique et le deuxième terminal d'alimentation électrique.

9. Un procédé de commande de charge, effectué par un dispositif de conversion de charge et comprenant :
dans un cas où le dispositif de conversion de charge est connecté à un dispositif de charge et à un dispositif électrique, si le dispositif de conversion de charge détecte qu'un premier protocole de charge supporté par le dispositif de charge est identique à un deuxième protocole de charge supporté par le dispositif électrique, ou si le dispositif de charge n'a pas de protocole de charge rapide, la commutation (31) sur un premier mode de communication, et la commutation (31) d'un mode charge en un mode protection contre les surtensions ; et
la commutation (32), si le dispositif de conversion de charge détecte que le premier protocole de charge est différent du deuxième protocole de charge, sur un deuxième mode de communication, et la commutation (32) d'un mode charge en un mode protection contre les surtensions ou un mode ajustement de puissance de sortie ; où, dans le premier mode de communication, le dispositif de charge communique directement avec le dispositif électrique ; et
dans le deuxième mode de communication, le dispositif de charge et le dispositif électrique communiquent l'un avec l'autre par l'intermédiaire du dispositif de conversion de charge ;
**caractérisé en ce que**
la commutation (32), si le dispositif de conversion de charge détecte que le premier protocole de charge est différent du deuxième protocole de charge, sur un deuxième mode de communication, et la commutation (32) d'un mode charge en un mode protection contre les surtensions ou un mode ajustement de puissance de sortie comprennent :
dans un cas où il est détecté que le premier protocole de charge est différent du deuxième protocole de charge, et qu'un procédé d'ajustement de tension correspondant au premier protocole de charge est un ajustement discret, la commutation sur le deuxième mode de communication, et la commutation du mode charge en mode ajustement de puissance de sortie ; et
dans un cas où il est détecté que le premier protocole de charge est différent du deuxième protocole de charge, et qu'un procédé d'ajustement de tension correspondant au premier protocole de charge est un ajustement continu, la commutation sur le deuxième mode de communication, et la commutation du mode charge en mode protection contre les surtensions.

10. Une puce, comprenant un processeur et une interface de communication, où l'interface de communication est couplée au processeur, et le processeur est configuré pour exécuter un programme ou une instruction afin de mettre en œuvre des étapes du procédé de commande de charge selon la revendication 9.

11. Un produit programme d'ordinateur, où le produit programme d'ordinateur est stocké dans un support de stockage non volatile, et le produit programme d'ordinateur est exécuté par au moins un processeur (610) afin de mettre en œuvre des étapes du procédé de commande de charge selon la revendication 9.
